# EUROPÄISCHE PATENTSCHRIFT

(11) **EP 3 322 611 B1**
(45) Veröffentlichungstag und Bekanntmachung des Hinweises auf die Patenterteilung: **18.12.2019**
(21) Anmeldenummer: 16721639.9
(22) Anmeldetag: 29.04.2016
(51) Int. Cl.: B60K 35/00, B60K 37/06, G06F 3/01, G03H 1/00

(54) **VERFAHREN UND BEDIENSYSTEM ZUM BEDIENEN VON MINDESTENS EINER FUNKTION IN EINEM FAHRZEUG**
METHOD AND OPERATOR CONTROL SYSTEM FOR OPERATING AT LEAST ONE FUNCTION IN A VEHICLE
PROCÉDÉ ET SYSTÈME DE COMMANDE PERMETTANT DE COMMANDER AU MOINS UNE FONCTION DANS UN VÉHICULE

(30) Priorität: 16.07.2015 DE 102015213424
(43) Veröffentlichungstag der Anmeldung: 23.05.2018
(73) Patentinhaber: Audi AG, 85045 Ingolstadt (DE)
(72) Erfinder: HOLLMIG, Ralph, 85049 Ingolstadt (DE)
(86) Internationale Anmeldenummer: PCT/EP2016/000702
(87) Internationale Veröffentlichungsnummer: WO 2017/008868

(56) Entgegenhaltungen:
- WO-A1-02/39200
- DE-A1- 19 843 902
- DE-A1-102013 204 242
- KR-A- 20150 072 206
- US-A1- 2005 002 074
- US-A1- 2011 191 707

## Beschreibung

Die vorliegende Erfindung betrifft ein Bediensystem zum Bedienen mindestens einer Funktion in einem Innenraum eines Fahrzeugs. Ferner betrifft die vorliegende Erfindung ein entsprechendes Verfahren und ein Fahrzeug mit einem erfindungsgemäßen Bediensystem.

Eine Bedienung und eine Anzeige von Funktionen in einem Fahrzeug erfolgen gegenwärtig in der Regel konventionell, d. h. unter Verwendung von Dreh-, Drücktasten, Schaltern etc. So existieren bspw. Schalter oder Taster für eine Steuerung von Sicherheitskomponenten, wie bspw. eines elektronischen Sicherheitsassistenten, von Komforteinrichtungen, wie bspw. einer Sitzverstellung, einer Sitzheizung, elektrischer Fensterheber, elektrisch verstellbarer Außenspiegel, oder von Komponenten eines Infotainmentsystems, wie bspw. eines Navigationssystems oder eines Autoradios.

Die in den Fahrzeugen generell vorgesehenen Anzeigevorrichtungen sind oft als LCDs zur Darstellung von Betriebsdaten ausgestaltet.

Derartige Bedien- und/oder Anzeigeeinrichtungen sind bspw. unterhalb einer Oberkante eines Armaturenbrettes oder im Bereich einer Mittelkonsole im Sichtfeld eines entsprechenden Fahrers vorgesehen.

Bekannt ist es ferner, Anzeigeeinrichtungen im Fahrzeug vorzusehen, bei denen ein für den Fahrer oder einen weiteren Fahrzeuginsassen sichtbares virtuelles Bild im Bereich einer Windschutzscheibe des Fahrzeugs erzeugt wird. Derartige Einrichtungen werden als Head-up-Displays (HUDs) bezeichnet.

Der Innenraum eines jeweiligen Fahrzeugs ist aufgrund eines umfangreichen Funktionsangebotes mit vielen Tastern und Schaltern ausgestattet. Die Taster und Schalter sind dabei visuell auch bei Nichtgebrauch sichtbar. Dies führt zu einer sehr komplexen Anmutung für einen jeweiligen Fahrer. Dadurch ist es denkbar, dass der Fahrer aufgrund der Komplexität und der Vielzahl der Bedien- und/oder Anzeigeelemente zu sehr vom Straßenverkehr abgelenkt wird. Es besteht ein nicht einschätzbares Sicherheitsrisiko.

Aus der EP 1 798 588 A1 ist ein Bediensystem zum Bedienen von Funktionen in einem Fahrzeug mit einer Darstellungseinrichtung zur grafischen Darstellung von den Funktionen zugeordneten, virtuellen Bedienelementen auf einer zugeordneten Darstellungsfläche in dem Fahrzeug und mit einer Erfassungseinrichtung zum Erfassen von Bedieneingaben bei einer Betätigung der virtuellen Bedienelemente bekannt.

Aus der DE 10 2008 059 810 A1 ist ein Bediensystem zum Bedienen von Funktionen in einem Kraftfahrzeug bekannt, welches ein optisches Projektionssystem zur grafischen Wiedergabe von virtuellen Anzeigeelementen und/oder von virtuellen Bedienelementen auf einer zugeordneten Darstellungsfläche in dem Kraftfahrzeug und eine Erfassungseinrichtung zum Erfassen von Bedieneingaben bei einer Betätigung der virtuellen Bedienelemente umfasst.

Aus der DE 10 2006 000 777 A1 ist ein Verfahren und eine Vorrichtung für eine Fahrzeugzutrittssteuerung unter Verwendung einer abgebildeten Tastatur bekannt.

Die WO 02/39200 A1 offenbart ein Verfahren zum Steuern von Geräten, Maschinen und/oder Fahrzeugen bei dem ein virtuelles Bedienungselement, dem eine bestimmte Funktion zugeordnet ist, in den Aktionsbereich einer Bedienungsperson projiziert werden soll. Des Weiteren soll berührungslos eine Bewegung der Bedienungsperson in Richtung des virtuellen Bedienungselements erfasst und nachdem die Bewegung der Bedienungsperson als Schalt- bzw. Bedienungsabsicht erkannt ist, die dem virtuellen Bedienungselement zugeordnete Funktion geschaltet werden.

Die US 2005/0002074 A1 offenbart verschiedene Ausführungsformen von Vorrichtungen zum Steuern eines elektronischen oder elektro-mechanischen Geräts ohne ein festes Objekt zu berühren. Die Vorrichtungen umfassen jeweils holographische Mitte zum Erzeugen eines holographischen Bildes eines Eingabeobjekts, Beleuchtungsmittel, Erfassungsmittel zum Erfassen einer Auswahl des Bedieners, und Signalerzeugungsmittel zum Empfangen eines Signals, das die Erfassung durch die Erfassungsmittel anzeigt und ein Eingabesignal an das Gerät bereitstellt, wobei die holographischen Mittel an entweder einem durchsichtigen oder durchscheinenden Material befestigt ist.

Die DE 2013 204 242 A1 offenbart eine Anzeige- und Bedienvorrichtung mit einer Anzeigeeinrichtung zum Anzeigen eines Menüs und einer Sensoreinrichtung, die einen dreidimensionalen Erfassungsraum aufweist. In dem Erfassungsraum soll ein Körperteil einer Bedienperson detektiert und abhängig von der Detektion die Anzeigeeinrichtung angesteuert werden. Die Anzeigeeinrichtung soll einen Projektor umfassen, der zum Projizieren von dreidimensionalen Menüobjekten in einem dreidimensionalen Anzeigeraum ausgebildet ist. Der Anzeigeraum soll sich hinter einer transparenten Scheibe befinden. Um eines der angezeigten Menüobjekte auswählen zu können, soll eine Trajektorie eines Fingers einer Bedienperson in dem Erfassungsraum bestimmt werden.

Die DE 198 43 902 A1 offenbart ein Bildinformations-Anzeigesystem, das einen transparenten Träger, einen an dem transparenten Träger befestigten Hologrammschirm, eine Strahlungseinheit zum Abstrahlen einer Bildinformation auf den Hologrammschirm, einen Sensor zum Feststellen des Umgebungszustands innerhalb des Betrachtungswinkels des Hologrammschirms und einen Regler zum Regeln der Stahlungseinheit auf der Grundlage des Signals des Sensors umfasst.

Es ist eine Aufgabe der vorliegenden Erfindung, ein Bediensystem zum Bedienen mindestens einer Funktion in einem Innenraum eines Fahrzeug vorzusehen, welches eine einfache und ein einen jeweiligen Fahrer wenig vom Straßenverkehr ablenkendes Bedienen ermöglicht und ferner einen geringen Raumbedarf erfordert.

Die Aufgabe wird durch ein Bediensystem mit den Merkmalen des unabhängigen Patentanspruchs 1 sowie durch ein Fahrzeug mit den Merkmalen des Patentanspruchs 14 und ein Verfahren mit den Merkmalen des unabhängigen Patentanspruchs 10 gelöst. Weitere Ausführungsformen sind den jeweiligen Unteransprüchen sowie der Beschreibung zu entnehmen.

Das erfindungsgemäße Bediensystem zum Bedienen mindestens einer Funktion in einem Innenraum eines Fahrzeugs umfasst einen Darstellungsgenerator, der nach Aktivierung eines der mindestens einen Funktion zugeordneten Darstellungsbereichs im Innenraum des Fahrzeugs zur holografischen Darstellung mindestens eines der mindestens einen Funktion zugeordneten, virtuellen Bedienelements in dem der mindestens eine Funktion zugeordneten Darstellungsbereich in dem Innenraum des Fahrzeugs konfiguriert ist, eine Detektions- und Erfassungseinrichtung, die zum Detektieren und Erfassen mindestens einer als Bedieneingabe zu interpretierenden Geste eines Fahrzeuginsassen bei einer seitens des Fahrzeuginsassen gewünschten Betätigung des mindestens einen virtuellen Bedienelements konfiguriert ist, und eine Recheneinheit, die dazu ausgebildet ist, die Geste als Bedieneingabe zu interpretieren und eine der Bedieneingabe entsprechende Umsetzung der mindestens einen Funktion zu initiieren.

Gemäß einer Ausgestaltung des erfindungsgemäßen Bediensystems umfasst der Darstellungsgenerator eine Lichtquelle und ein optisches Projektionssystem. Der Darstellungsgenerator umfasst ein Speichermedium, I

insbesondere eine holografische Fotoplatte, auf welcher ein gespeichertes Bild bzw. ein Hologramm eines oder mehrerer Bedienelemente abgelegt ist. Die Fotoplatte wird bzw. ist im Fahrzeug verbaut und wird bei Aktivierung des Darstellungsbereichs mit einer Lichtquelle, vorzugsweise einem Laser hinterleuchtet. Dadurch wird ein virtuelles Bedienelement oder es werden mehrere virtuelle Bedienelemente sichtbar, das bzw. die dem gespeicherten Bild des einen oder der mehreren Bedienelemente entspricht bzw. entsprechen. Dieses Hologramm eines oder mehrerer Bedienelemente, welches die jeweiligen Bedienelemente in Form eines Tasters, eines Dreh-/ Drückschalters oder Ähnlichem zeigt, ist für eine Dauer einer Benutzung sichtbar.

Der Darstellungsgenerator umfasst neben dem Speichermedium, insbesondere der holografischen Fotoplatte, einen Prozessor, um das Hologramm abzubilden. Alternativ ist der Darstellungsgenerator mit einem separaten Prozessor und/oder Speicher verbunden, um das Hologramm abzubilden bzw. zu rekonstruieren. Ferner können auch der Darstellungsgenerator und die Detektions- und Erfassungseinrichtung eine gemeinsame Verarbeitungseinheit teilen. Ferner ist es denkbar, dass eine Bibliothek mit vorbestimmten Hologrammen für eine Auswahl von virtuellen Bedienelementen durch einen Fahrer oder einen weiteren Fahrzeuginsassen in einem Speicherabschnitt des Speichermediums, das von dem Darstellungsgenerator umfasst ist, gespeichert wird.

Im Rahmen der vorliegenden Erfindung wird als Hologramm ein Speicherbild bezeichnet, das einer mit holografischen Techniken hergestellten fotografischen Aufnahme entspricht, die nach Ausarbeitung und Beleuchtung mit gleichartigem Licht ein echtes dreidimensionales Abbild eines Ursprunggegenstands, hier mindestens eines Bedienelements wiedergibt. Zur Wiedergabe des Hologramms dient das als Teil des Darstellungsgenerators vorgesehene optische Projektionssystem. Das optische Projektionssystem umfasst als Speichermedium eine holografische Fotoplatte und ggf. eine optische Projektionslinse zum Projizieren des Hologramms, das auf dem Speichermedium des Darstellungsgenerators hinterlegt ist. Ein reflektierender Spiegel, eine Linse, ein Kombinator oder jede Kombination aus diesen können verwendet werden, um das projizierte Hologramm in Abhängigkeit von einer gewünschten Darstellung zu verändern. Als Darstellungsbereich können verschiedene Komponenten oder auch ein definierter Luftbereich im Innenraum des Fahrzeugs dienen, so dass auf einen großen Stauraum einnehmende Displays verzichtet werden kann. Bei dem Luftbereich kann es sich bspw. um einen freien Bereich vor einer Windschutzscheibe des Fahrzeugs, vor einer Mittelkonsole des Fahrzeugs oder dergleichen handeln. Dadurch ergeben sich aufgrund des geringeren benötigten Raumbedarfs gute Gestaltungsfreiheiten und niedrige Herstellungskosten. Zudem können bestimmte Komponenten im Innenraum des Fahrzeugs, die als Darstellungsbereich dienen, in dem Fahrzeug mit einer Doppelfunktion belegt werden, da sie neben ihrer eigenen Funktion, wie bspw. der Funktion eines Ablagefachs, eine weitere Funktion, nämlich das Bilden des Darstellungsbereichs bzw. zumindest eines Teils des Darstellungsbereichs, aufweisen. Des Weiteren können störende Reflektionen, die von bspw. Displayabdeckungen und Schnittlinien ausgehen, vermieden werden.

Schalter, Tasten, Lenkstockhebel, Längssäulenverstellung und Integration von Sensoren in eine Schalttafel können vollständig entfallen.

Erfindungsgemäß wird der Innenraum des Fahrzeugs in Funktions- bzw. Darstellungsbereiche eingeteilt, in welchen jeweils mittels des Darstellungsgenerators verschiedene Funktionen mittels entsprechend verschiedenen, virtuellen Bedienelementen bei Bedarf durch eine jeweilige holografische Darstellung bzw. ein jeweiliges Hologramm angezeigt werden können. Erfindungsgemäß ist vorgesehen, dass der Darstellungsgenerator die der mindestens einen Funktion zugeordneten, virtuellen Bedienelemente in dem der mindestens einen Funktion zugeordneten Darstellungsbereich in dem Innenraum des Fahrzeugs erst nach Aktivierung des der mindestens einen Funktion zugeordneten Darstellungsbereichs im Innenraum des Fahrzeugs darstellt.

Bei dem erfindungsgemäßen Bediensystem bedeutet dies, dass der Darstellungsbereich erst bei Eintritt eines die Gesten durchführenden Elements, insbesondere einer Hand eines Fahrzeuginsassen in einen definierten, dem Darstellungsbereich zugeordneten Wirkbereich automatisch aktiviert wird und dadurch das mindestens eine oder die mehreren der mindestens einen Funktion zugeordneten, virtuellen Bedienelemente sichtbar gemacht werden. Das bedeutet, dass erst bei Eintritt bspw. einer Hand in den dem entsprechenden Darstellungsbereich zugeordneten Wirkbereich eine Aktivierung des Darstellungsbereichs erfolgt, so dass erst dann durch den Darstellungsgenerator das hinterlegte, dem Darstellungsbereich zugeordnete Hologramm angezeigt wird und deshalb auch erst dann das mindestens eine oder die mehreren durch das Hologramm wiedergegebenen Bedienelemente durch mindestens eine entsprechende Geste, die als Bedieneingabe zu interpretieren ist, bedient werden können.

In weiterer Ausgestaltung ist das erfindungsgemäße Bediensystem dazu ausgelegt, den Darstellungsbereich nach Initiierung der entsprechenden Umsetzung der Funktion automatisch zu deaktivieren, wodurch die virtuellen Bedienelemente, insbesondere die durch die holografische Darstellung gezeigten Bedienelemente, unsichtbar gemacht werden. Dazu wird bspw. automatisch die zur Hinterleuchtung der holografischen Fotoplatte eingesetzte Lichtquelle deaktiviert bzw. ausgeschaltet.

Es ist ferner denkbar, dass das erfindungsgemäße Bediensystem dazu ausgelegt ist, den Darstellungsbereich, nachdem er aktiviert wurde, nach einer definierten Zeitdauer, wenn keine als Bedieneingabe zu interpretierende Geste erfasst wird, automatisch zu deaktivieren. Das bedeutet, dass, wenn ein Fahrer oder ein weiterer Fahrzeuginsasse versehentlich in den Wirkbereich eines dem Wirkbereich zugeordneten Darstellungsbereichs kommt, und dieser Darstellungsbereich dadurch aktiviert wird, der Fahrer jedoch keine Bedienung der dann dargestellten, virtuellen Bedienelemente wünscht, die Darstellung nach gewisser Zeit automatisch wieder verschwindet, da der jeweilige Darstellungsbereich automatisch wieder deaktiviert wird und dadurch die Bedienelemente unsichtbar gemacht werden.

In weiterer Ausgestaltung des erfindungsgemäßen Bediensystems sind die Detektions- und Erfassungseinrichtung und/oder der Darstellungsgenerator im Bereich einer vorderen Dachkonsole des Fahrzeugs angeordnet, wobei die Darstellung des mindestens einen der mindestens einen Funktion zugeordneten, virtuellen Bedienelements in einem Bereich eines Armaturenbretts des Fahrzeugs erfolgt.

Die vorliegende Erfindung betrifft ferner ein Fahrzeug mit einem erfindungsgemäßen, voranstehend beschriebenen Bediensystem.

Des Weiteren betrifft die vorliegende Erfindung ein Verfahren zum Bedienen mindestens einer Funktion in einem Innenraum eines Fahrzeugs. Das erfindungsgemäße Verfahren umfasst mindestens die folgenden Schritte:
- holografisches Darstellen mindestens eines der mindestens einen Funktion zugeordneten, virtuellen Bedienelements in einem der mindestens einen Funktion zugeordneten Darstellungsbereich in dem Innenraum des Fahrzeugs nach Aktivierung des Darstellungsbereichs bei Eintritt eines die Gesten durchführenden Elements in einen definierten, dem Darstellungsbereich zugeordneten Wirkbereich,
- Detektieren und Erfassen mindestens einer als Bedieneingabe für das mindestens eine Bedienelement zu interpretierenden Geste eines Fahrzeuginsassen,
- Interpretieren der mindestens einen Geste als Bedieneingabe für das mindestens eine Bedienelement und
- Initiieren einer der Bedieneingabe entsprechenden Umsetzung der mindestens einen Funktion.

In möglicher Ausgestaltung umfasst das erfindungsgemäße Verfahren des Weiteren den Schritt des Bereitstellens eines das mindestens eine Bedienelement darstellenden Hologramms, das auf einer holografischen Fotoplatte gespeichert ist. Das Hologramm bzw. das gespeicherte Bild wird durch eine bekannte holografische Technik erzeugt. Dabei wird ein reales, virtuell darzustellendes Bedienelement mit kohärentem Licht einer Lichtquelle, insbesondere eines Lasers beleuchtet. Das Licht wird reflektiert und gestreut. Dadurch entsteht ein mit den Augen wahrnehmbares Wellenfeld, das auch Objektwelle genannt wird. Die Objektwelle überlagert sich mit dem einfallenden, ungestreuten Licht, der sogenannten Referenzwelle, desselben Lasers, d. h. jeweilige Wellenfronten der Objektwelle und der Referenzwelle interferieren miteinander. Die entstehenden Interferenzmuster treffen auf die holografische Fotoplatte und werden dort als Hologramm aufgezeichnet, was durch entsprechende Hinterleuchtung, in der Regel mit einer Welle, die mit der Referenzwelle identisch ist, wieder abgebildet und somit dargestellt werden kann. Dadurch wird das zunächst aufgenommene und im Hologramm abgelegte Bedienelement räumlich abgebildet, d. h. virtuell räumlich dargestellt. Dabei umfasst der Schritt des holografischen Darstellens ein entsprechendes Beleuchten des das mindestens eine Bedienelement bzw. die mehreren Bedienelemente darstellenden Hologramms.

In weiterer Ausgestaltung umfasst der Schritt des Interpretierens ein Vergleichen der mindestens einen Geste mit in einer abrufbaren Speichereinheit hinterlegten Gesten.

Gemäß einer weiteren bevorzugten Ausführungsform des erfindungsgemäßen Bediensystems projiziert das von dem Darstellungsgenerator umfasste Projektionssystem neben den virtuellen Bedienelementen weitere Bildelemente, wie bspw. Ist-Werte von vorbestimmten Fahrzeugsystemen, bspw. eines Komfortsystems. Dadurch beinhaltet das erfindungsgemäße Bediensystem sowohl eine Anzeigefunktion für eine Anzeige von Systemwerten und der betätigbaren Bedienelemente als auch eine Funktion zur Realisierung der Bedienelemente an sich, welche durch entsprechende Gesten ausgewählt und aktiviert werden.

Gemäß einer weiteren Ausführungsform des erfindungsgemäßen Bediensystems ist eine zentrale Steuereinheit vorgesehen, welche mit einer Sensorik zur Erfassung einer Aktivierung des Darstellungsbereichs, mit der Detektions- und Erfassungseinrichtung und dem Projektionssystem verbunden ist.

Bei dem Sensor zur Erfassung einer Aktivierung des Darstellungsbereichs kann es sich bspw. um eine optische Einheit wie bspw. eine Kamera handeln, die dazu ausgelegt ist, zu detektieren, sobald bspw. eine Hand eines Fahrzeuginsassen in den dem Darstellungsbereich zugeordneten Wirkbereich gelangt, wodurch der Darstellungsbereich aktiviert wird. Sobald von dem Sensor zur Erfassung einer Aktivierung des Darstellungsbereichs detektiert wird, dass bspw. eine Hand des Fahrers in den Wirkbereich des Darstellungsbereichs gelangt, wird ein entsprechendes Signal an die zentrale Steuereinheit gesendet, die daraufhin das Projektionssystem, insbesondere die mit dem Projektionssystem verbundene Lichtquelle aktiviert, wodurch das mindestens eine der Funktion zugeordnete Bedienelement holografisch dargestellt wird. Des weiteren bewirkt die zentrale Steuereinheit eine Aktivierung der Detektions- und Erfassungseinrichtung, so dass darüber eine ggf. erfolgende Geste zur Bedienung des mindestens einen holografisch dargestellten Bedienelements detektiert und entsprechend erfasst werden kann. Der Sensor zur Erfassung einer Aktivierung des Darstellungsbereichs kann in der Detektions- und Erfassungseinrichtung zur Detektion und Erfassung von als Bedieneingaben zu interpretierenden Gesten integriert bzw. mit umfasst sein. Durch die Verbindung der Detektions- und Erfassungseinrichtung sowie des Projektionssystems und der damit in Verbindung stehenden Lichtquelle mit der zentralen Steuereinheit erfolgt die holografische Darstellung jeweiliger Bedienelemente von in der Regel mehreren Funktionen automatisch nach Bedarf bzw. automatisch, sobald ein Ausführungselement wie bspw. eine Hand in einen dem jeweiligen Darstellungsbereich zugeordneten Wirkbereich gelangt, und dabei von dem Sensor zur Erfassung einer Aktivierung des entsprechenden Darstellungsbereichs erfasst wird.

Ferner ist es denkbar, dass die zentrale Steuereinheit eine sich ändernde holografische Darstellung der virtuellen Bedienelemente in Abhängigkeit der erfassten Gesten, die als Bedieneingaben zu interpretieren sind, bewirkt.

Dadurch können auch in einem gemeinsamen Darstellungsbereich veränderbare bzw. variable Bedienelemente dargestellt werden, wobei ggf. mehrere Menüebenen darstellbar und ausführbar sind. Die zentrale Steuereinheit steuert den Darstellungsgenerator derart an, dass in dem Darstellungsbereich die den betätigten, virtuellen Bedienelementen zugeordnete Menüebene bzw. die zugeordneten neuen grafischen Symbole dargestellt werden.

Es ist auch denkbar, dass die zentrale Steuereinheit den Darstellungsgenerator bzw. das von dem Darstellungsgenerator umfasste Projektionssystem für eine Darstellung von virtuellen Bedienelementen in Abhängigkeit von bestimmten, momentanen Fahrparametern ansteuert. Beispielsweise werden bei einem erkannten Fahrzeugunfall automatisch Notrufnummern, ein Warnblinksymbol und andere nutzvolle betätigbare Bedienelemente grafisch durch das Projektionssystem in dem zugeordneten Darstellungsbereich abgebildet. Dadurch erfolgt kein Überladen von angezeigten Bedienelementen. Vielmehr werden nur augenblicklich sinnvolle und mit einer hohen Auswahlwahrscheinlichkeit belegte Bedienelemente in dem zugeordneten Darstellungsbereich einem Fahrzeuginsassen angezeigt. Als Darstellungsbereich kann bspw. ein Bereich im Umfeld einer Mittelkonsole oder eines Dachhimmels, einer Sonnenblende, eines Armaturenbretts, einer Seitenverkleidung, einer Fahrzeugscheibe und/oder anderer Fahrzeugkomponenten dienen. Die erfindungsgemäß vorgesehene Erfassungs- und Detektionseinrichtung kann als Bedieneingaben interpretierbare Gesten erkennen und bspw. über die voranstehend beschriebene zentrale Steuereinheit initiieren, dass die entsprechenden Bedieneingaben bzw. die den Bedieneingaben zugeordnete Funktion ausgeführt wird. Dabei kann die Detektions- und Erfassungseinrichtung bspw. im Bereich der vorderen Dachkonsole, der Längssäulenverkleidung, der Türverkleidung, des äußeren Dachrahmens, der Seitenverkleidung oder dergleichen angeordnet sein.

In möglicher Ausgestaltung weist die Detektions- und Erfassungseinrichtung eine Kamera auf, welche eine Betätigung der virtuellen Bedienelemente optisch erfasst.

Die mehreren virtuellen Bedienelemente sind in der Regel unterschiedlichen Fahrzeugfunktionen zugeordnet. Es ist denkbar, dass jeder Funktion genau ein virtuelles Bedienelement zugeordnet ist. Es ist jedoch auch denkbar, dass mehrere Bedienelemente für eine Funktion vorgesehen sind. Diese Fahrzeugfunktionen können bspw. Sicherheitsfunktionen, Komfortfunktionen und/oder Infotainmentfunktionen entsprechen.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in der Zeichnung schematisch dargestellt und wird unter Bezugnahme auf die Zeichnung schematisch oder ausführlich beschrieben.

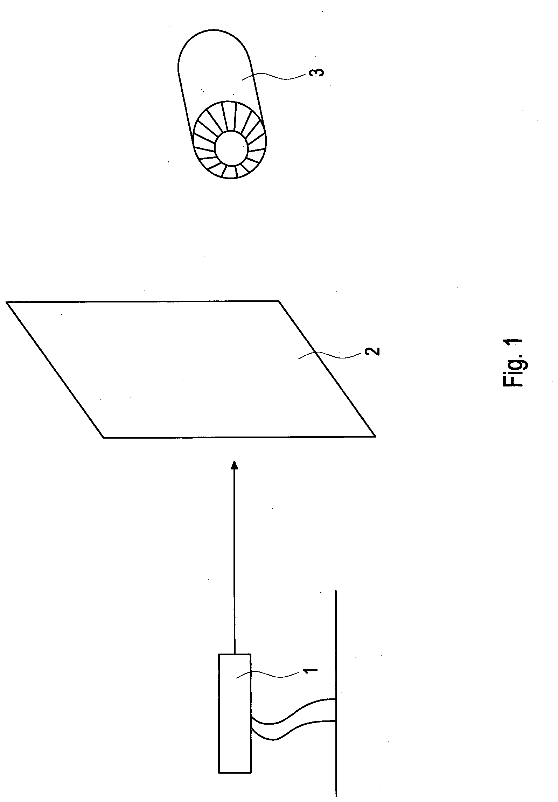

Figur 1 zeigt in schematischer Darstellung, wie gemäß einer Ausführungsform des erfindungsgemäßen Verfahrens ein Bedienelement virtuell dargestellt wird.

Figur 1 zeigt eines Beleuchtungsquelle 1, eine holografische Fotoplatte 2 und ein virtuell dargestelltes Bedienelement 3. Die holografische Fotoplatte 2 ist in einem, hier nicht dargestellten Fahrzeug an einer geeigneten Stelle, wie bspw. im Bereich einer Mittelkonsole des Fahrzeugs angeordnet. Die Beleuchtungsquelle 1, bei der es sich in der Regel um einen Laser handelt, ist aus Sicht eines Fahrzeuginsassen, wie bspw. eines Fahrers, hinter der Fotoplatte 2 angeordnet. Die Fotoplatte 2 und der räumliche Bereich um die Fotoplatte herum definiert einen Darstellungsbereich. Möchte nun der Fahrer eine Funktion, die mit dem Bedienelement 3 zu aktivieren ist, ausführen, bringt er seine Hand oder nur einen Finger der Hand in die Nähe der Fotoplatte 2 und somit in einen den Darstellungsbereich umgebenden und dem Darstellungsbereich zugeordneten Wirkbereich. Dies wird von einer, hier nicht gezeigten Sensorik detektiert, wodurch der Darstellungsbereich aktiviert wird und damit die Beleuchtungsquelle 1, so dass diese die Fotoplatte 2 beleuchtet. Auf der Fotoplatte 2 ist ein Hologramm hinterlegt, in dem das Bedienelement aufgenommen bzw. aufgezeichnet ist. Durch Beleuchtung der Fotoplatte 2 bzw. des darauf abgelegten Hologramms wird das Bedienelement 3 virtuell räumlich dargestellt. Dabei muss allerdings das von der Beleuchtungsquelle 1 ausgesandte Licht genau dem Licht entsprechen, mit dem das auf der Fotoplatte 2 hinterlegte Hologramm aufgenommen wurde. Durch geeignete Gesten bzw. durch mindestens eine Geste kann der Fahrer nun das Bedienelement 3 bedienen. Die von dem Fahrer getätigten Gesten bzw. die mindestens eine von dem Fahrer getätigte Geste werden bzw. wird von einer, hier nicht dargestellten Detektions- und Erfassungseinrichtung erkannt und interpretiert und an eine, hier ebenfalls nicht dargestellte Steuereinheit weitergeleitet, die dann ein entsprechendes Ausführen der mit dem Bedienelement 3 assoziierten Funktion initiiert.

## Patentansprüche

1. Bediensystem zum Bedienen mindestens einer Funktion in einem Innenraum eines Fahrzeugs, mit einem Darstellungsgenerator, der nach Aktivierung eines der mindestens einen Funktion zugeordneten Darstellungsbereichs im Innenraum des Fahrzeugs zur holographischen Darstellung mindestens eines der mindestens einen Funktion zugeordneten, virtuellen Bedienelements (3) in dem der mindestens einen Funktion zugeordneten Darstellungsbereich in dem Innenraum des Fahrzeugs konfiguriert ist, einer Detektions- und Erfassungseinrichtung, die zum Detektieren und Erfassen mindestens einer als Bedieneingabe zu interpretierenden Geste eines Fahrzeuginsassen bei einer seitens des Fahrzeuginsassen gewünschten Betätigung des mindestens einen virtuellen Bedienelements (3) konfiguriert ist, und einer Recheneinheit, die dazu ausgebildet ist, die Geste als Bedieneingabe zu interpretieren und eine der Bedieneingabe entsprechende Umsetzung der mindestens einen Funktion zu initiieren, **dadurch gekennzeichnet, dass** die Aktivierung des der mindestens einen Funktion zugeordneten Darstellungsbereichs im Innenraum des Fahrzeugs erst bei Eintritt eines die Gesten durchführenden Elements in einen definierten, dem Darstellungsbereich zugeordneten Wirkbereich erfolgt.

2. Bediensystem nach Anspruch 1, bei dem der Darstellungsgenerator dazu ausgelegt ist, die holografische Darstellung des mindestens einen der mindestens einen Funktion zugeordneten, virtuellen Bedienelements (3) in dem zugeordneten Darstellungsbereich durch ein entsprechend zu beleuchtendes, aus einem Speichermedium abrufbares Hologramm zu realisieren.

3. Bediensystem nach Anspruch 1 oder 2, bei dem der Darstellungsgenerator eine Lichtquelle und ein optisches Projektionssystem umfasst.

4. Bediensystem nach Anspruch 3, bei dem die Lichtquelle ein Laser ist.

5. Bediensystem nach Anspruch 3 oder 4, bei dem das optische Projektionssystem mindestens eine holografische Fotoplatte umfasst, die von der Lichtquelle zu beleuchten ist, wobei auf der Fotoplatte ein Hologramm aufgezeichnet ist, dass das mindestens eine virtuelle Bedienelement (3) abbildet.

6. Bediensystem nach einem der voranstehenden Ansprüche, das dazu ausgelegt ist, den Darstellungsbereich erst bei Eintritt eines die mindestens eine Geste durchführenden Elements, insbesondere einer Hand eines Fahrzeuginsassen in einen definierten, dem Darstellungsbereich zugeordneten Wirkbereich automatisch zu aktivieren und dadurch das mindestens eine der mindestens einen Funktion zugeordnete, virtuelle Bedienelement (3) sichtbar zu machen.

7. Bediensystem nach einem der voranstehenden Ansprüche, das dazu ausgelegt ist, den Darstellungsbereich nach Initiierung der entsprechenden Umsetzung der Funktion automatisch zu deaktivieren, wodurch das mindestens eine Bedienelement (3) unsichtbar gemacht wird.

8. Bediensystem nach einem der voranstehenden Ansprüche, das dazu ausgelegt ist, den Darstellungsbereich, nachdem er aktiviert wurde, nach einer definierten Zeitdauer, wenn keine als Bedieneingabe zu interpretierende Geste erfasst wird, automatisch zu deaktivieren.

9. Bediensystem nach einem der voranstehenden Ansprüche, bei dem die Detektions- und Erfassungseinrichtung und/oder der Darstellungsgenerator im Bereich einer vorderen Dachkonsole des Fahrzeugs angeordnet sind, wobei die Darstellung des mindestens einen der mindestens einen Funktion zugeordneten, virtuellen Bedienelements (3) in einem Bereich eines Armaturenbretts des Fahrzeugs erfolgt.

10. Verfahren zum Bedienen mindestens einer Funktion in einem Innenraum eines Fahrzeugs, wobei das Verfahren mindestens die folgenden Schritte aufweist:
- holografisches Darstellen mindestens eines der mindestens einen Funktion zugeordneten, virtuellen Bedienelements in einem der mindestens einen Funktion zugeordneten Darstellungsbereich in dem Innenraum des Fahrzeugs;
- Detektieren und Erfassen mindestens einer als Bedieneingabe des Bedienelements zu interpretierenden Geste eines Fahrzeuginsassen;
- Interpretieren der mindestens einen Geste als Bedieneingabe des Bedienelements;
- Initiieren einer der mindestens eine Bedieneingabe entsprechenden Umsetzung der mindestens einen Funktion,
wobei das holografische Darstellen nach Aktivierung des der mindestens einen Funktion zugeordneten Darstellungsbereichs im Innenraum des Fahrzeugs erfolgt, **dadurch gekennzeichnet, dass** die Aktivierung erst bei Eintritt eines die Gesten durchführenden Elements in einen definierten, dem Darstellungsbereich zugeordneten Wirkbereich erfolgt.

11. Verfahren nach Anspruch 10, das ferner den Schritt aufweist: Bereitstellen mindestens eines das mindestens eine Bedienelement darstellenden Hologramms.

12. Verfahren nach Anspruch 11, bei dem der Schritt des holografischen Darstellens ein entsprechendes Beleuchten des mindestens einen das mindestens eine Bedienelement darstellenden Hologramms umfasst.

13. Verfahren nach einem der Ansprüche 10 bis 12, wobei der Schritt des Interpretierens umfasst:
- Vergleichen der mindestens einen Geste mit in einer abrufbaren Speichereinheit hinterlegten Gesten.

14. Fahrzeug mit einem Bediensystem nach einem der Ansprüche 1 bis 9.

## Claims

1. Operator control system for operating at least one function in an interior of a vehicle, having a representation generator which after activating a representation region, assigned to the at least one function, in the interior of the vehicle is configured for the holographic representation of at least one virtual operating element (3), assigned to the at least one function, in the representation region assigned to the at least one function in the interior of the vehicle, a detection and capturing device, which is configured for the detecting and capturing of at least one gesture, to be interpreted as an operating input, of a vehicle occupant in the case of an actuation, desired on the part of the vehicle occupant, of the at least one virtual operating element (3), and a computing unit, which is configured to interpret the gesture as an operating input and to initiate an implementation, corresponding to the operating input, of the at least one function, **characterised in that** the activation of the representation region, assigned to the at least one function, in the interior of the vehicle takes place only on the entry of an element, carrying out the gestures, into a defined effective region assigned to the representation region.

2. Operator control system according to claim 1, in which the representation generator is configured to realise the holographic representation of the at least one virtual operating element (3), assigned to the at least one function, in the assigned representation region by means of a hologram which is to be lit accordingly and retrieved from a storage medium.

3. Operator control system according to claim 1 or 2, in which the representation generator comprises a light source and an optical projection system.

4. Operator control system according to claim 3, in which the light source is a laser.

5. Operator control system according to claim 3 or 4, in which the optical projection system comprises at least one holographic photo plate which is to be illuminated by the light source, wherein on the photo plate is laid down a hologram that forms the at least one virtual operating element (3).

6. Operator control system according to any of the preceding claims, which is configured automatically to activate the representation region only on the entry of an element carrying out the at least one gesture, in particular a hand of a vehicle occupant into a defined effective region assigned to the representation region and thereby to make visible the at least one virtual operating element (3) assigned to the at least one function.

7. Operator control system according to any of the preceding claims, which is configured to automatically deactivate the representation region after initiation of the corresponding implementation of the function as a result of which the at least one operating element (3) is made invisible.

8. Operator control system according to any of the preceding claims, which is configured to automatically deactivate the representation range, after it is been activated, after a defined time duration if no gesture is detected, which is to be interpreted as an operating input.

9. Operator control system according to any of the preceding claims, in which the detection and capturing device and/or the representation generator are disposed in the region of a front roof bracket of the vehicle, wherein the representation of the at least one virtual operating element (3), assigned to the at least one function, takes place in a region of an instrument panel of the vehicle.

10. Method for operating at least one function in an interior of a vehicle, wherein the method has at least the following steps:
- holographic representation of at least one virtual operating element, assigned to the at least one function, in a representation region, assigned to the at least one function, in the interior of the vehicle;
- detection and capture of at least one gesture, to be interpreted as an operating input of the operating element, of a vehicle occupant;
- interpretation of the at least one gesture as an operating input of the operating element;
- initiation of an implementation, corresponding to the at least one operating input, of the at least one function,
wherein the holographic representation takes place after activating the representation region, assigned to the at least one function, in the interior of the vehicle, **characterised in that** the activation takes place only at the entry of an element, carrying out the gestures, into a defined effective region assigned to the representation region.

11. Method according to claim 10, which furthermore has the step of:
providing at least one hologram representing the at least one operating element.

12. Method according to claim 11, in which the step of the holographic representation comprises a corresponding illumination of the at least one hologram representing the at least one operating element.

13. Method according to any of claims 10 to 12, wherein the step of the interpreting comprises:
- comparing the at least one gesture with gestures stored in a retrievable storage unit.

14. Vehicle having an operator control system according to any of claims 1 to 9.

## Revendications

1. Système de commande permettant de commander au moins une fonction dans un habitacle d'un véhicule, avec un générateur de représentation, qui est configuré après activation d'une zone de représentation associée à l'au moins une fonction dans l'habitacle du véhicule pour la représentation holographique d'au moins un élément de commande virtuel (3) associé à l'au moins une fonction dans la zone de représentation associée à l'au moins une fonction dans l'habitacle du véhicule, un dispositif de détection et de collecte, qui est configuré pour la détection et la collecte d'au moins un geste d'un occupant de véhicule à interpréter en tant que saisie de commande lors d'un actionnement souhaité de la part de l'occupant de véhicule de l'au moins un élément de commande virtuel (3), et une unité de calcul, qui est réalisée pour interpréter le geste en tant que saisie de commande et pour initier une mise en œuvre correspondante de la saisie de commande de l'au moins une fonction, **caractérisé en ce que** l'activation de la zone de représentation associée à l'au moins une fonction dans l'habitacle du véhicule n'a lieu que lors de l'entrée d'un élément effectuant les gestes dans une zone active définie, associée à la zone de représentation.

2. Système de commande selon la revendication 1, dans lequel le générateur de représentation est conçu pour réaliser la représentation holographique de l'au moins un élément de commande virtuel (3) associé à l'au moins une fonction dans la zone de représentation associée par un hologramme à éclairer en conséquence, téléchargeable à partir du support de mémoire.

3. Système de commande selon la revendication 1 ou 2, dans lequel le générateur de représentation comprend une source de lumière et un système de projection optique.

4. Système de commande selon la revendication 3, dans lequel la source de lumière est un laser.

5. Système de commande selon la revendication 3 ou 4, dans lequel le système de projection optique comprend au moins une plaque photographique holographique, qui doit être éclairée par la source de lumière, dans lequel un hologramme est enregistré sur la plaque photographique, qui représente l'au moins un élément de commande virtuel (3).

6. Système de commande selon l'une quelconque des revendications précédentes, qui est conçu pour activer automatiquement la zone de représentation que lors de l'entrée d'un élément effectuant l'au moins un geste, en particulier d'une main d'un occupant de véhicule dans une zone active définie, associée à la zone de représentation et ainsi rendre visible l'au moins un élément de commande virtuel (3), associé à l'au moins une fonction.

7. Système de commande selon l'une quelconque des revendications précédentes, qui est conçu pour désactiver automatiquement la zone de représentation après initiation de la mise en œuvre correspondante de la fonction, moyennant quoi l'au moins un élément de commande (3) est rendu invisible.

8. Système de commande selon l'une quelconque des revendications précédentes, qui est conçu pour désactiver automatiquement la zone de représentation, après avoir été activé, après une durée définie, lorsqu'aucun geste à interpréter en tant que saisie de commande n'est détecté.

9. Système de commande selon l'une quelconque des revendications précédentes, dans lequel le dispositif de détection et de collecte et/ou le générateur de représentation sont agencés dans la zone d'une console de toit avant du véhicule, dans lequel la représentation de l'au moins un élément de commande virtuel (3) associé à l'au moins une fonction a lieu dans une zone d'un tableau de bord du véhicule.

10. Procédé de commande d'au moins une fonction dans un habitacle d'un véhicule, dans lequel le procédé présente au moins les étapes suivantes :
- représentation holographique d'au moins un élément de commande virtuel associé à l'au moins une fonction dans une zone de représentation associée à l'au moins une fonction dans l'habitacle du véhicule ;
- détection et collecte d'au moins un geste d'un occupant de véhicule à interpréter en tant que saisie de commande de l'élément de commande ;
- interprétation de l'au moins un geste en tant que saisie de commande de l'élément de commande ;
- initiation d'une mise en œuvre correspondante de l'au moins une saisie de commande de l'au moins une fonction,
dans lequel la représentation holographique a lieu après activation de la zone de représentation associée à l'au moins une fonction dans l'habitacle du véhicule, **caractérisé en ce que** l'activation n'a lieu que lors de l'entrée d'un élément effectuant les gestes dans une zone active définie, associée à la zone de représentation.

11. Procédé selon la revendication 10, qui présente en outre l'étape de :
mise à disposition d'au moins un hologramme représentant l'au moins un élément de commande.

12. Procédé selon la revendication 11, dans lequel l'étape de la représentation holographique comprend un éclairage correspondant de l'au moins un hologramme représentant l'au moins un élément de commande.

13. Procédé selon l'une quelconque des revendications 10 à 12, dans lequel l'étape de l'interprétation comprend :
- la comparaison de l'au moins un geste avec des gestes enregistrés dans une unité de mémoire téléchargeable.

14. Véhicule avec un système de commande selon l'une quelconque des revendications 1 à 9.
